(19) Europäisches Patentamt
European Patent Office
Office européen des brevets

(11) Veröffentlichungsnummer: **0 218 866**
**B1**

(12) # EUROPÄISCHE PATENTSCHRIFT

(45) Veröffentlichungstag der Patentschrift: **21.06.89**

(51) Int. Cl.[4]: **C08F 20/12,** C08F 2/44

(21) Anmeldenummer: **86111848.7**

(22) Anmeldetag: **27.08.86**

(54) **Verfahren zur Herstellung härtbarer Giessharze.**

(30) Priorität: **07.09.85 DE 3531914**

(43) Veröffentlichungstag der Anmeldung:
**22.04.87 Patentblatt 87/17**

(45) Bekanntmachung des Hinweises auf die Patenterteilung:
**21.06.89 Patentblatt 89/25**

(84) Benannte Vertragsstaaten:
**DE FR GB IT NL**

(56) Entgegenhaltungen:
**EP-A- 0 107 764**
**FR-A- 2 503 168**
**US-A- 4 221 697**

**Die Akte enthält technische Angaben, die nach dem Eingang der Anmeldung eingereicht wurden und die nicht in dieser Patentschrift enthalten sind.**

(73) Patentinhaber: **Röhm GmbH, Kirschenallee Postfach 4242, D-6100 Darmstadt 1(DE)**

(72) Erfinder: **Ittmann, Günther, Waldstrasse 15, D-6114 Gross-Umstadt(DE)**
Erfinder: **Krieg, Manfred, Dr., Kesselhutweg 19, D-6100 Darmstadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Die Erfindung betrifft ein Verfahren zur Herstellung von Gießharzen mit hohen Anteilen an feinteiligen Füllstoffen un von dünnflüssiger Konsistenz, die sich in an sich bekannter Weise, z. B. durch Zusatz geeigneter Initiatoren sowohl unter Druck als auch ohne Druck härten lassen.

Stand der Technik

Als Gießharze bezeichnet man allgemein flüssige oder durch mäßige Erwärmung verflüssigbare, in Formen vergießbare Kunstharze.

Aus der DE-PS 24 49656 sind stabile, fließfähige, formbare und härtbare Massen aus einer polymerisierbaren, organischen Flüssigkeit und teilchenförmigen, anorganischen Füllstoffen bekannt, erhalten durch Dispergieren eines Füllstoffes (B) in einem Bestandteil (A) in Gegenwart eines Dispergiermittels (C) und gegebenenfalls eines Bindesmittels (D), wobei (A), (B), (C) und (D) die folgende Bedeutungen haben:

(A) Ein organischer flüssiger Präkursor mit einer Viskosität bei der Formgebungstemperatur der härtbaren Masse von maximal 5,0 Pa.s der aus

A 1) einem flüssigen Monomeren der Monomerengemischen, das bzw. die unter Polymerisation oder Polyaddition ein festes Polymeres bilden kann bzw. können, bei dem die wiederkehrenden Einheiten in der polymeren Kette durch C - C Bindungen oder durch C - C-Bindungen, die durch die Heteroatome O,N oder Si unterbrochen sind, verknüpft sind, oder

A 2) einer Mischung von einem oder mehreren vorgebildeten Polymeren mit einem oder mehreren Monomeren, deren monomerer Bestandteil unter Polymerisation oder Polyaddition ein festes Polymeres bilden kann, oder

A 3) einem partiell polymerisierten Material oder einem Präpolymeren, das unter Polymerisation oder Polyaddition ein festes Polymeres zu bilden vermag,

(B) 20 bis 90 Vol.-% eines feinteiligen, anorganischen Füllstoffs, mit einem elastischen Schermodul von mindestens 5 $GN.m^{-2}$ und einer maximalen Teilchengröße von 100 µm, wobei mindestens 95 % der Teilchen eine Größe von höchstens 10 µm und höchstens 10 % der Teilchen eine Größe von ≤ 0,1 µm haben.

(C) Wenigstens 0,01 $g.m^{-2}$, bezogen auf die Gesamtoberfläche der Teilchen des Bestandteils (B), eines polymeren Dispersionsmittels mit zumindest einer polymeren Kette mit einem Molekulargewicht von zumindest 500, das eine oder mehrere Verankerungsgruppen enthält, die zur Assoziierung mit dem Füllstoff (B) befähigt sind, mit der Maßgabe, daß (a) die polymere Kette so ausgewählt ist, daß sie durch flüssigen polymerisierbaren Bestandteil (A) in dem Maß solvatisierbar ist, daß sie - als unabhängiges Molekül - in dem Bestandteil (A) eine bedeutend bessere Löslichkeit aufweist als in einem Thetalösungsmittel, (b) das polymere Dispersionsmittel mit dem Produkt der Polymerisation des Bestandteils (A) verträglich ist, und (c) gegebenenfalls funktionelle Gruppen enthält, die zur Pfropfung der Copolymerisation mit den in der Komponenten A anwesenden Monomere während der Härtungsoperation fähig sind,

(D) Niedermolekulares Bindemittel mit einer oder mehreren zur Wechselwirkung mit den im Bestandteil (B) vorhandenen Gruppen befähigten Gruppen(n) sowie einer oder mehreren Gruppen, die mit dem durch Polymerisation des flüssigen Präkursors (A) gebildeten Polymeren copolymerisieren oder Pfropfungen eingehen können.

In der DE-OS 33 31 371 wurden Gießharze auf Basis von Acrylsäureestern mit einem hohen Anteil an feindispersen Füllstoffen vorgeschlagen. Die Gießharze enthalten ein Gemisch aus Organosiliciumverbindungen mit funktionellen Gruppen und Metallsäureestern von Metallen der IV. und V. Nebengruppe des Periodensystems. Die funktionelle Gruppe der Organosiliciumverbindung ist ethylenisch ungesättigt und entweder direkt oder über Alkylengruppen mit dem Siliciumatom verbunden; sie kann ein- oder mehrmals im Molekül enthalten sein. Der Zusatz dieses Gemischs zu den an sich bekannten Gießharzen bewirkt eine erwünschte Herabsetzung der Viskosität dieser Harze, die bei spielsweise zur Herstellung von Sanitärartikeln eingesetzt werden.

Aufgabe

Erwünscht sind dünnflüssige Gießharze mit hohen Anteilen an feinteiligen Füllstoffen. Die Füllstoffe können zur Erhöhung der Biegefestigkeit und Schlagzähigkeit der aus den Gießharzen hergestellten Formkörper beitragen. Hohe Füllstoffanteile sind ferner erwünscht, weil mit steigendem Anteil der Polymerisationsschrumpf, der während der Härtung des Gießharzes stattfindet, abnimmt und zudem die Härtungszeiten verringert werden.

Bei der Herstellung der Formkörper wirkt sich verständlicherweise eine niedrige Viskosität der Gießharze günstig aus, erlaubt sie doch die Formen möglichst formgenau auszufüllen und den notwendigen Füllgrad zu erreichen.

Die Lösungen des Standes der Technik konnten nicht in jeder Hinsicht befriedigen. Eines der Hauptprobleme bei der Herstellung dünnflüssiger hochgefüllter Gießharze liegt im Einbringen des anorganischen Füllstoffs in die infolge des Monomerengehalts ungesättigte organische Phase. Die anorganischen Füllstoffe wie z. B. Cristobalit, Quarzmehl und dgl. können in Mengen von 60 - 80 Gew.-% der Monomerenmischung nicht direkt zugesetzt werden, da unweigerlich eine bröcklige Masse entsteht, die zum Vergießen in eine Form ungeeignet ist. Um gute mechanische Eigenschaften zu erreichen, muß eine chemische Verknüpfung zwischen anorganischer und organischer Phase hergestellt werden. Dies kann in an sich bekannter Weise mit Organosiliciumverbindungen erreicht werden.

Das Einbringen des anorganischen Anteils in die organische Phase wird gemäß der DE-OS 24 49 656 mit **polymeren** Dispergiermitteln erreicht. Die

Lehre dieser Druckschrift betrifft relativ komplexe Systeme, bei denen die polymeren Dispergiermittel und die übrigen Komponenten jeweils aufeinander abgestimmt werden müssen. Erwünscht war ohne erheblichen Aufwand, stabile Dispersionen der Füllmaterialien relativ unabhängig von der Natur der Füllmaterialien zu erhalten.

In der DE-OS 24 49 656 werden experimentelle Ergebnisse berichtet, die unter **Weglassung** des polymeren Dispergierungsmittels insgesamt oder durch Ersatz mittels eines herkömmlichen Dispergierungsmittels erhalten wurden. Dabei wird zum Beispiel Quarz-Silica unter Scherwirkung in eine Mischung von Methylmethacrylat und $\gamma$-Methacryloyloxypropyltrimethoxysilan eingearbeitet. Man erhielt eine sehr dicke, geflockte Mischung, die nicht gegossen werden konnte. Die Mischung wurde preßgeformt und gehärtet, wobei man ein rissiges, fehlerhaftes Bahnmaterial erhielt. Die DE-OS 33 31 371 empfiehlt die Verwendung von Organosiliciumverbindungen zusammen mit Metallsäureestern der IV. und V. Nebengruppe des Periodensystems.

In der DE-OS 33 31 371 wird darauf hingewiesen, daß das Problem der Viskosität bei hochgefüllten Gießharzen durch den Zusatz von Organosiliciumverbindungen nicht gelöst werden könne. Einige Organosiliciumverbindungen bewirkten sogar noch eine zusätzliche Erhöhung der Viskosität. Offenbar erhält man erst durch Zusatz der Metallsäureester oder der organischen Komplex salze der Metalle der IV. oder V. Nebengruppe des periodischen Systems der Elemente zusätzlich zu den Organosiliciumverbinddungen die Einstellung einer geeigneten Konsistenz.

Es bestand nach wie vor Bedarf nach hochgefüllten Gießharzen, die leicht zugänglich und nicht so aufwendig sein sollten wie der Stand der Technik.

Um eine technisch befriedigende Entformung zu gewährleisten ist es oft angezeigt an sich bekannte Trennmittel zuzusetzen.

Als Trennmittel können z. B. Metallseifen , wie z. B. Metallstearate, Silikone, Polymere wie Polyamide und Polyethylene, ferner Talkum Glimmer u.ä. verwendet werden.

## Lösung

Es wurde gefunden, daß das erfindungsgemäße Verfahren zur Herstellung von Gießharzen mit Anteilen von 50 - 80 Gew.-% an feinteiligen anorganischen Füllstoffen auf Basis von (Meth)acrylsäureestern und unter Verwendung von Organosiliciumverbindungen als Haftvermittlern zur Lösung der bestehenden Aufgabe besonders geeignet ist.

Die Herstellung der Gießharze wird dabei unter völligem Ausschluß von Metallsäureestern von Metallen der IV. und V. Nebengruppe des periodischen Systems der Elemente vorgenommen. Desweiteren werden keine polymeren funktionellen Dispergiermittel zugesetzt.

Bei dem Verfahren wird die härtbare Polymervorstufe auf Basis von (Meth)acrylsäureestern mit der Organosiliciumverbindung und Alkylamin als einem auf die Organosiliciumverbindung wirkenden Katalysator gemischt und in diese Mischung werden feinteilige, anorganische Füllstoffe in solchen Portionen eingetragen, daß die Viskosität des Gemisches nicht über ca. 10 Pa•s * (gemessen im Rotationsviskosimeter nach DIN 53019, Teil 1, bei 20°C) steigt, vorzugsweise unter Anwendung von Scherkräften und die zunächst gebildete thixotrope Suspension durch Stehenlassen bei Raumtemperatur oder kurzfristiges Erwärmen in eine voll entflockte, dünnflüssige Suspension überführt.

Die voll entflockte dünnflüssige Suspension besitzt zweckmässig eine Viskosität von nicht mehr als 500 mPa s.

Die erfindungsgemäß hergestellten Gießharze können zur Herstellung von Formkörpern der verschiedensten Art dienen, insbesondere von Sanitärgegenständen wie z. B. Spülen, Waschbecken usw. Allgemein eröffnen sie die Aussicht auf den Ersatz der unter relativ hohem Energieaufwand hergestellten keramischen Werkstoffe.

## Die Polymervorstufe

Als flüssige Polymervorstufe eignen sich Monomere M bzw. Mischungen von Monomeren vorzugsweise unter Zusatz von Praepolymerisaten PM die unter Bildung eines bei Raumtemperatur festen Polymeren - vorzugsweise radikalisch - polymerisiert werden können.

Die vorliegende Erfindung schließt in dieser Hinsicht an die Lehre des Standes der Technik (z. B. die "Praekursoren" der DE-OS 24 49 656) an. Im allgemeinen weisen die flüssigen Polymervorstufen FP eine Viskosität von $\leq$ 5 Pa.s bei den zur Formgebung vorgesehenen Temperaturen auf, vorzugsweise $\leq$ 0.1 Pa.s.

Genannt seien vinylische Monomere, oder Vinyliden-Monomere (= Monomere M; vgl. Ullmann's Encyclopädie der Technischen Chemie, 3. Auflage Bd. 14, Pg. 108 - 110, Urban & Schwarzenberg 1963), wie z. B. Vinylester und -ether, saure Vinylverbindungen, Vinylische Carbonylverbindungen, Vinylaromaten und heterocylische Vinylverbindungen, Olefine, halogenierte Olefine, insbesondere Derivate der Acryl- und der Methacrylsäure. Bevorzugt werden im letzten Falle Monomere der Formel I.

$$\begin{array}{ccccccc} & & R & & O & & \\ & & | & & \| & & \\ CH_2 & = & C & - & C & - & OR_1 \end{array} \qquad I$$

worin R für Wasserstoff oder Methyl, $R_1$ für einen gegebenenfalls verzweigten, gegebenenfalls substituierten Alkylrest mit 1 bis 18 Kohlenstoffatomen oder einen gegebenenfalls substituierten Arylrest mit 6 bis 10 Kohlenstoffatomen steht. Als Substituenten seien an sich bekannte Substituenten wie Halogen, Hydroxy, Alkoxy-, Dialkylamino-Substituenten mit $C_1$ - $C_{17}$ Alkylresten, vorzugsweise $C_1$ - $C_6$ - Alkylresten genannt.

Genannt seien als Monomer M insbesondere die Verbindungen der Formel I worin $R_1$ für Alkylreste

mit 1 bis 8 Kohlenstoffatomen steht, insbesondere Ethylacrylat und -methacrylat, Propylacrylat und -methacrylat, Butylacrylat und -methacrylat mit den Isomeren, 2-Ethylhexylacrylat und -methacrylat, Phenylacrylat und - methacrylat, Benzylacrylat und -methacrylat und speziell Methylmethacrylat. Ferner können die flüssigen Polymervorstufen noch an sich bekannte vernetzungsfähige Monomere enthalten, z. B. solche die mindestens zwei polymerisationsfähige Vinylgruppen im Molekül enthalten (vgl. H. Rauch-Puntigam, Th. Völker, Acryl- und Methacrylverbindungen", Pg. 184, Springer Verlag 1967). Genannt seien z. B. Ethylenglykoldimethacrylat, 1,4-Butandioldimethacrylat, Triglykoldimethacrylat, Trimethylolpropantrimethacrylat, Allylverbindungen wir Allylmethacrylat oder Tri-Allylcyanurat, Allyldiglycolcarbonat. Der Gehalt an Vernetzer liegt im allgemeinen bei 0.01 bis 10 Gew.-% vorzugsweise bei 0,1 bis 5 Gew.-% bezogen auf die flüssigen Polymervorstufen. Vorzugsweise liegt der Gehalt an Methylmethacrylat über 50 Gew.-%, speziell von 80 - 100 Gew.-% bezogen auf die flüssige Polymervorstufe.

Als Comonomere können ferner weitere, mit (Meth)acrylester copolymerisierbare Monomere verwendet werden z. B. die bereits vorstehend genannten Vinylaromaten und heterocyclischen Vinylverbindungen, wie Styrol, die Methyl styrole wie $\alpha$-Methylstyrol und Divinylbenzol, Vinylpyrrolidon, Vinylpyridin, Acrylnitril und Methacrylnitril, Vinylester wie Vinylacetat und -propionat, Vinylchlorid und Vinylidenchlorid. Im allgemeinen überwiegt der gewichtsmäßige Anteil der von der (Meth)acrylsäure abgeleiteten Derivate, (> 50 Gew.-%) speziell der Ester der Formel I und der vernetzenden Monomeren; er kann vorteilhaft bis 100 Gew.-% der Polymervorstufe ausmachen. Besonders günstig ist ein Gemisch aus dem Monomeren Methylmethacrylat und einem vernetzenden Monomeren wie z. B. glykoldimethacrylat. Vorteilhaft liegt das Gewichtsverhältnis bis 100 : 2. Vorteilhafterweise besteht die flüssige Polymervorstufe aus Monomeren M wie vorstehend erläutert; vorzugsweise unter Zusatz von Praepolymerisaten PM. Die Praepolymerisate PM sind im allgemeinen aus denselben Typen von Monomeren aufgebaut wie die vorstehend erläuterten Monomeren M, enthalten jedoch keinerlei funktionalisierte Monomere. Es gelten auch im allgemeinen dieselben Proportionen wie für die Monomeren M angegeben. Die monomeren Bestandteile der Praepolymerisate PM können identisch sein mit den Monomeren M oder auch von diesen verschieden. Vorzugsweise sind die Praepolymerisate PM in den Monomeren gelöst, sie können aber auch darin dispergiert sein. Die Praepolymerisate haben in der Regel Molekulargewichte im Bereich $2.10^4$ bis $4.10^5$. (Bestimmt mittels Gelchromatographie). Der Anteil der Praepolymerisate an den flüssigen Polymervorstufen liegt im Bereich 0 - 20 Gew.-%, vorzugsweise 0 - 10 Gew.-%. Genannt sei z. B. ein Praepolymerisat aus Methylmethacrylat und Methylacrylat im Gewichtsverhältnis 1 : 9 mit reduz. Viskosität $\eta_{spez/c}$ von 110 ml/g.

<u>Die Füllstoffe</u>

Als Füllstoffe eignen sich die einschlägig für Gießharze verwendeten feinteiligen anorganischen Materialien. Zweckmäßig wird eine Korngröße von 100 µm Durchmesser vorzugsweise 50 µm nicht überschritten. Vorzugsweise sollen zweckmäßig mindestens 95 % der Teilchen ≤ 10 µm groß sein. Teilchen mit einer Größe von ≤ 0,1 µm sollen nach Möglichkeit nicht mehr als 10 % der gesamten Teilchenzahl ausmachen. Die Teilchengröße wird gemäß den üblichen Verfahren bestimmt (vgl. B. Scarlett, in "Filtration & Separation" Pg. 215, 1965). Zur Teilchengrößenbestimmung werden die jeweils größten Abmessungen der Partikel herangezogen. Bevorzugt werden kornförmige Partikel. Gelegentlich kann es vorteilhaft sein, die Partikel durch Erhitzen, etwa auf 150°C, von adsorptiv gebundener Feuchtigkeit zu befreien.

Die Füllstoffe können Naturprodukte oder synthetisch hergestellt sein. Die mechanischen Eigenschaften wie Härte, elastischer Schermodul bemessen sich nach dem vorgesehenen Anwendungszweck der Gießharze. Dabie kann die Einstellung eines elastischen Schermoduls von wenigstens 5 $GNm^{-2}$ vorteilhaft sein. Geeignet sind z. B. Mineralien wie Aluminiumoxide und Derivate z. B. Alkali- und Erdalkalidoppeloxide, Tone, Siliciumdioxide in seinen verschiedenen Modifikationen, Silikate, Aluminosilikate, Carbonate, Phosphate, Sulfate, Sulfide, Oxide, Kohle, Metalle und Metallegierungen. Ferner sind synthetische Materialien wie Glasmehl, Keramik, Porzellan, Schlacke, feinverteiltes synthetisches Si $O_2$ geeignet. Genannt seien Kieselsäuremodifikationen wie Quarz (Quarzmehl) Tridymit und Cristobalit, sowie Kaolin, Talcum, Glimmer, Feldspat, Apatit, Baryte, Gips, Kreide, Kalkstein, Dolomit. Gegebenenfalls können auch Gemische von Füllstoffen angewendet werden. Der Füllstoffanteil an den Gießharzen der vorliegenden Erfindung beträgt mindestens 20 Gew.-%. Im allgemeinen wird ein Anteil von 80 Gew.-% nicht überschritten. Als Richtwert sei ein Füllgehalt der Gießharze von 50 - 80 Gew.-% angegeben. Die Herstellung der Füllstoffe in den zweckmäßigen Korngrößen kann nach den bekannten Verfahren erfolgen z. B. durch Brechen und Mahlen. Besonders bevorzugt ist Cristobalit.

<u>Die Organosilicium-Komponente</u>

Die Organosilicium-Komponente dient in an sich bekannter Weise als Haftvermittler, zwischen Füllstoff und organischer Phase. Es können somit die aus dem Stand der Technik bekannten Organosilicium-Verbindungen eingesetzt werden. Bei Anwendung der Organosiliciumverbindungen gemäß der vorliegenden Erfindung wird kein Gebrauch gemacht von Metallsäureestern von Metallen der IV. oder V. Nebengruppe des Periodensystems.

In erster Linie handelt es sich um funktionelle Organosiliciumverbindungen mit mindestens einer ethylenisch ungesättigten Gruppe im Molekül. Der die ethylenisch ungesättigte Gruppe tragende funktionelle Rest ist im allgemeinen über ein C-Atom mit

dem zentralen Siliciumatom verknüpft. Die verbleibenden Liganden am Silicium sind in der Regel Alkoxyreste mit 1 bis 6 Kohlenstoffatomen (wobei sich noch Etherbrücken im Alkylrest befinden können). Genannt seien z. B. die Vinyltrialkoxysilane. Die CC-Doppelbindung kann auch über eine oder mehrere Kohlenstoffatome mit dem Si-Atom verbunden sein, z. B. in Form der Allyltrialkoxysilane oder der γ-Methacryloyloxypropyltrialkoxysilane. Auch Dialkoxysilane können verwendet werden, wobei am Si-Atom ein weiterer funktioneller Rest mit einer CC-Dippelbindung, meist des gleichen Typs, oder ein Alkylrest mit vorzugsweise 1 bis 6 Kohlenstoffatomen gebunden ist. Es können auch verschiedene Typen von Organosiliciumverbindungen in der Organosilicium-Komponente vorhanden sein.

Genannt seien z. B. das Vinyltrimethoxysilan, Vinyltriethoxysilan, Vinyltriacetoxysilan, Vinyltris-(methoxyethoxy)-silan, Divinyldimethoxysilan, Vinylmethyldimethoxysilan, Vinyltrichlorsilan, γ-Methacryloyloxypropiytrimethoxysilan oder γ-Methacroyloyloxypropyltris(methoxyethoxy)-silan.

Vorteilhafterweise werden die Organosiliciumverbindungen zu sammen mit Katalysatoren von Amintyp, insbesondere vom Typ der Alkylamine mit 3 bis 6 Kohlenstoffatomen, speziell mit n-Butylamin angewendet. Als Richtwert für die Anwendung des Amin-Katalysators kann 0,25 bis 5 Gew.-%, vorzugsweise 1 bis 3 Gew.-% der Organosiliciumkomponente angenommen werden.

Im allgemeinen beträgt das Gewichtsverhältnis anorg. Füllstoffe zu Organosiliciumverbindungen 500 : 1 bis 20 : 1, vorzugsweise 50 ± 25 : 1.

Das Verfahren zur Herstellung der härtbaren Gießharze

Zunächst wird die flüssige Polymervorstufe auf Basis von (Meth)acrylsäureestern mit der bzw. den Organosiliciumverbindungen und dem Alkylamin als Katalysator gemischt. Zu dieser Vorlage gibt man unter mechanischer Verteilung vorzugsweise durch Anwendung von Scherkräften, die feinteiligen anorganischen Füllstoffe in solchen Portionen zu, daß die Viskosität nicht über einen Wert von ca. 10 Pa.s ansteigt.

Vorzugsweise geht man so vor, daß man zunächst ca. 60 - 70 Gew.-% der anorganischen Füllstoffe einträgt. Der Ansatz wird zunächst pastös bis dickflüssig. Mit fortschreitender Zeit sinkt die Viskosität jedoch wieder ab und es kann nun wieder ein gewisser Anteil der anorganischen Füllstoffe zugesetzt werden. Nach ca. 1 - 2 Stunden ist in der Regel das Eintragen der Füllstoffe abgeschlossen.

Die Herstellung der härtbaren Gießharze in der zur Anwendung benötigen flüssigen Konsistenz kann durch Bewegen bei Raum temperatur während einer ausreichenden Zeit, z. B. 24 Stunden abgeschlossen werden.

Alternativ kann die Mischung nach der Zugabe von Füllstoffen auch thermisch behandelt werden. Als Temperaturbereich hat sich z. B. der Bereich 60 - 100°C, vorzugsweise 90 - 100°C bewährt. In der Praxis wird die dickflüssige Dispersion auf die entsprechende Temperatur aufgeheizt und danach sofort abgekühlt. Als Vorrichtung zur mechanischen Verteilung der Füllstoffe kommt z. B. ein Dissolver in Frage.

Das Bewegen der Mischung nach dem Eintragen kann z. B. auf einer Rollbank erfolgen.

Anwendung der Gießharze

Zur Herstellung von Gießlingen werden an sich übliche radikalische Beschleuniger in den üblichen Mengen zugesetzt, beispielsweise Perester wie z. B. Peroxidicarbonate, insbesondere das Bis-(4-tert-butylcyclohexyl)-peroxidicarbonat in Mengen von 1 bis 5 Gew.-% bezogen auf die Monomeren M. Zweckmäßigerweise geschieht der Zusatz der Beschleuniger erst kurz vor dem Verfüllen und Aushärten der Harze.

Den erfindungsgemäßen flüssigen Gießharzen können zusätzlich zu den feinteiligen Füllstoffen noch Verstärkerstoffe zugesetzt werden, beispielsweise vom Fasertyp. Zu den geeigneten Faserstoffen gehören z. B. Glasfasern, Mineralfasern, Steinfasern. Der Anteil dieser Verstärkerstoffe liegt im allgemeinen unterhalb des Gehaltes an den feinteiligen Füllstoffen.

Um farbige Formteile herstellen zu können, kann man der organischen Phase auch Pigmente und/oder Farbstoffe zusetzen. Genannt sei z. B. die Anwendung von Eisenoxid, Titandioxid, Zinkweiß, Ultramarinblau und Ruß.

Herstellung der Gußstücke

Das mit dem Beschleuniger versetzte härtbare flüssige Gießharz läßt sich sehr gut in die üblichen Gießformen vergießen. Vorteilhafterweise wird vor dem Verfüllen evakuiert. Die Härtung geschieht vorzugsweise thermisch, beispielsweise durch Erhitzen auf 50 - 80°C während 20 - 60 Minuten, zweckmäßig im Trockenschrank. Die Härtung kann sowohl unter Anwendung von Druck als auch ohne Druck erfolgen.

Mit Hilfe des erfindungsgemäßen Gießverfahrens lassen sich die vielfältigsten Formen füllen und eine technisch einwandfreie Polymerisation durchführen. Es können auf diese Weise Platten, Schüsseln, Waschbecken, Spülbecken, WC-Becken, Formkörper für die Bauindustrie, Maschinenfundamente, Behälter u. a. (hergestellt werden.) Die Vorteile dieser Art der Herstellung sind eine große Formenvielfalt, - auch relativ komplizierte Formen werden zugänglich -, geringer Energiebedarf, geringer Personalaufwand, ein hoher Grad an Zuverlässigkeit, wenig Nacharbeitungszeit. Die Gießharze gemäß der vorliegenden Erfindung sind zudem relativ leicht zugänglich und umweltfreundlich.

Hervorzuheben ist die tadellose Oberfläche, sowie die hohe Steifigkeit und Festigkeit der daraus hergestellten Formkörper.

Eigenschaften der Gießharze

Nach Abschluß des erfindungsgemäßen Verfahrens besitzen die Gießharze eine Viskosität (DIN

53211), Becherdurchmesser (6 mm) im Bereich 10 - 40 sec.

Aus Plattengießlingen wurden Probekörper gewonnen, an denen die mechanischen Eigenschaften bestimmt werden können.

Bei Gießharzen auf Basis von Methylmethacrylat/Glykoldimethacrylat im Gew.-Verhältnis von ca. 50 : 1 wurde eine Biegefestigkeit (nach DIN 35452) von 133 - 120 N/mm² und eine Schlagzähigkeit (nach DIN 53453) von mindestens 5 KJ/m² gefunden.

Die folgenden Beispiele dienen zur Erläuterung der Erfindung. Die Bestimmung der reduzierten Viskosität $\eta_{spez/c}$ geschieht in Chloroform bei 20°C im Micro-Ubbelohde-Viskosimeter. (Vgl. Houben-Weyl, Methoden der organischen Chemie, BD. 14/1, Seite 81 - 84, Georg-Thieme-Verlag, 1961).

Beispiel 1

Herstellung des Gießharzes

104 g Methylmethacrylat wird mit 2 g Ethylenglykoldimethacrylat und 8 g γ- Methacryloyloxypropyltrimethoxysilan unter Zusatz von 0,2 g n-Butylamin homogen vermischt.
Zu diesem Gemisch werden 280 g Cristobalit (Cristobalit T 6000, Korngröße 0,1 - 10 µm, Produkt der Fa. Quarzwerke, Köln) portions-weise mit Hilfe eines Dissolvers (UMA-Dissolver, Fa. VMA Getzmann, Verfahrenstechnik Heienbach, 5226 Reichshof) so eingetragen, daß die Viskosität des Gemisches 10 Pa•s nicht übersteigt. Die Dauer des Eintragens liegt bei ca. 1. Stunde, wobei in Intervallen zwischendurch, speziell gegen Ende, die Reaktion ohne Rühren ablaufen gelassen wird.
Der Ansatz wird nun 24 Stunden auf der Rollbank behandelt, dann setzt man 6 g eines Copolymerisats aus Methylmethacrylat und Methylacrylat (90 : 10 Gew.-Teile) mit einem $\eta_{spez/c}$-Wert von 110ml/g (Produkt PLEX 8 640 F® der Röhm GmbH) zu. Die Viskosität (nach DIN 53211, Becherdurchmesser 6 mm) beträgt 24 sec.

Beispiel 2

Herstellung eines Gußstücks

In das Gießharz gemäß Beispiel 1 werden 0,6 Gew.-Teile Bis(4-tert.-butylcycolhexyl)peroxydicarbonat als Initiator eingerührt. Anschließend wird evakuiert. Dann gießt man mit dem Gemisch Platten der Abmessung 200 x 200 x 4 mm. Die Härtung wird während ca. 25 Minuten bei 80°C durchgeführt. Aus den erhaltenen Platten werden zur Bestimmung der Biegefestigkeit Normkörper der Abmessungen 50 x 6 x 4 mm ausgesägt.
Bestimmt wurde: Biegefestigkeit (nach DIN 53452)
133 N/mm²
Schlagzähigkeit (nach DIN 53453)
6,0 KJ/m²

Beispiel 3

Herstellung eines Gießharzes

129,75 g Methylmethacrylat wird mit 2,5 g Ethylenglykoldimethacrylat und 10 g γ-Methacryloyloxypropyl-trimethoxysilan unter Zusatz von 0,25 g n-Butylamin homogen vermischt. Zu diesem Gemisch werden 350 g Cristobalit (s. Beispiel 1) portions-weise mit Hilfe eines Dissolvers so eingetragen, daß die Viskosität des Gemischs 10 Pa•s nicht überschreitet. Die Dauer des Eintragens liegt bei 70 Minuten. Danach läßt man noch 1/2 Stunde reagieren, und setzt noch 0,1 g 2,4-Dimethyl-6-tert.-butylphenol als Stabilisator zu.
Der Ansatz wird nun innerhalb 30 min. auf 95°C aufgeheizt und während etwa 1 Stunde abkühlen gelassen. Das Gemisch zeigt eine Viskosität (nach DIN 53211; Becherdurchmesser 6 mm)von 8,5 sec. Anschließend gibt man 5,0 g eines Ccpolymerisats aus Methylmethacrylat und Methylacrylat (9 : 1 Gew.-Teile) mit einem $\eta_{spez/c}$-Wert von 110 zu. Man erhalt ein völlig entflocktes Gießharz mit einer Viskosität (nach DIN 53211; Becherdurchmesser 6 mm) von 30 sec. Es wird ein Gießling nach Beispiel 2 hergestellt
Die mechanischen Eigenschaften entsprechen denjenigen von Beispiel 2.

**Patentansprüche**

1. Verfahren zur Herstellung von härtbaren Gießharzen mit hohen Anteilen an feinteiligen anorganischen Füllstoffen auf Basis von Estern der (Meth)acrylsäure und unter Verwendung von Organosiliciumverbindungen als Haftvermittler, dadurch gekennzeichnet, daß die flüssige Polymervorstufe auf Basis von (Meth)acrylsäureestern, wobei die Polymervorstufe zu mehr als 50 Gew.-% aus Estern der Methacrylsäure besteht, mit der Organosiliciumverbindung und Alkylamin als auf die Organosiliciumverbindung wirkenden Katalysator gemischt und in die entstehende Mischung 50–80 Gew.-% bezogen auf das Gießharz an feinteiligen anorganischen Füllstoffen in solchen Portionen eingetragen werden, daß die Viskosität des Gemisches 10 Pa s (gemessen im Rotationsviskosimeter nach DIN 53019, Teil 1, bei 20 Grad C) nicht übersteigt und die entstehende thixotrope Suspension durch Stehenlassen über einen ausreichenden Zeitraum bei Raumtemperatur oder durch kurzfristiges Erwärmen in eine voll entflockte, dünnflüssige Suspension überführt wird.

2. Verfahren gemäß Anspruch 1, dadurch gekennzeichnet, daß die flüssige Polymerstufe zu über 50 Gew.-% aus Methylmethacrylat aufgebaut ist.

3. Verfahren gemäß Anspruch 1 und 2 dadurch gekennzeichnet daß die flüssige Polymervorstufe 0,01 bis 10 Gew.-% eines Vernetzers enthält.

4. Verfahren gemäß Anspruch 1 und 2, dadurch gekennzeichnet, daß die Organosiliciumverbindungen γ-Methacryloyloxypropyltrialkoxysilane enthalten.

5. Verfahren gemäß den Ansprüchen 1 bis 4, dadurch gekennzeichnet, daß das Gewichtsverhältnis

anorganischer Füllstoffe zu Organosiliciumverbindung 500 : 1 bis 20 : 1 beträgt.

6. Verfahren gemäß den Ansprüchen 1 bis 5, dadurch gekennzeichnet, daß die als Katalysatoren auf die Organosiliciumverbindungen wirkenden Alkylamine in Anteilen von 0,25 bis 5 Gew.-% bezogen auf die Organosiliciumverbindungen eingesetzt werden.

7. Verfahren gemäß den Ansprüchen 1 bis 6, dadurch gekennzeichnet, daß die feinteiligen anorganischen Füllstoffe im Verlauf von 1 bis 2 Stunden eingetragen werden.

8. Verfahren gemäß den Ansprüchen 1 bis 7, dadurch gekennzeichnet, daß nach dem Eintragen der anorganischen Feststoffe die entstehende, thixotrope Suspension bei 60 - 100°C thermisch behandelt wird.

9. Verfahren gemäß den Ansprüchen 1 bis 7, dadurch gekennzeichnet, daß nach dem Eintragen der anorganischen Fest stoffe die entstehende thixotrope Suspension wenigstens 24 Stunden bei Raumtemperatur reagieren gelassen wird.

10. Verfahren gemäß den Ansprüchen 1 bis 9 dadurch gekennzeichnet, daß die voll entflockte dünnflüssige Suspension eine Viskosität von nicht mehr als 500 mPa•s besitzt.

**Claims**

1. Process for preparing curable casting resins containing large amounts of finely divided inorganic fillers based on esters of (meth)acrylic acid and using organosilicon compounds as adhesion promoters, characterised in that the liquid polymer precursor based on (meth)acrylic acid esters, the polymer precursor consisting of more than 50% by weight of esters of methacrylic acid, is mixed with the organosilicon compound and alkylamine as the catalyst acting on the organosilicon compound and 50–60% by weight, based on the casting resin, of finely divided inorganic fillers are added to the resulting mixture in batches so that the viscosity of the mixture does not exceed 10 Pa s (measured in a rotary viscometer according to DIN 53019, Part 1, at 20°C) and the resulting thixotropic suspension is converted, by leaving it to stand for a sufficient length of time at ambient temperature or by briefly heating it, into a fully deflocculated, thin liquid suspension.

2. Process as claimed in claim 1, characterised in that the liquid polymer stage is made up of more than 50% by weight of methylmethacrylate.

3. Process as claimed in claims 1 and 2, characterised in that the liquid polymer precursor contains 0.01 to 10% by weight of a cross-linking agent.

4. Process as claimed in claims 1 and 2, characterised in that the organosilicon compounds contain $\gamma$-methacryloyloxypropyltrialkoxysilanes.

5. Process as claimed in claims 1 to 4, characterised in that the weight ratio of inorganic fillers to organosilicon compound is from 500 : 1 to 20 : 1.

6. Process as claimed in claims 1 to 5, characterised in that the alkylamines which act as catalysts on the organosilicon compounds are used in amounts of from 0.25 to 5% by weight, based on the organosilicon compounds.

7. Process as claimed in claims 1 to 6, characterised in that the finely divided inorganic fillers are added in the course of 1 to 2 hours.

8. Process as claimed in claims 1 to 7, characterised in that after the inorganic solids have been added the resulting thixotropic suspension is thermally treated at 60–100°C.

9. Process as claimed in claims 1 to 7, characterised in that, after the addition of the inorganic solids, the resulting thixotropic suspension is left to react for at least 24 hours at ambient temperature.

10. Process as claimed in claims 1 to 9, characterised in that the totally deflocculated, thin liquid suspension has a viscosity of not more than 500 mPa.s.

**Revendications**

1. Procédé pour la préparation de résines de coulée durcissables comportant des teneurs élevées en charges inorganiques finement divisées à base de (méth)acrylates et avec utilisation de composés organiques du silicium en tant que promoteur d'adhérence, caractérisé en ce que le précurseur polymère liquide à base de (méth)acrylates, le précurseur polymère étant constitué, pour plus de 50% en poids, de méthacrylates, est mélangé au composé organique du silicium et à une alkylamine servant de catalyseur agissant sur le composé organique du silicium, et que l'on introduit dans le mélange obtenu 50 à 80% en poids, par rapport à la résine de coulée, de charges inorganiques finement divisées, en des portions telles que la viscosité du mélange ne dépasse pas 10 Pa.s (mesurée au viscosimètre rotatif selon DIN 53019, Partie 1, à 20°C), et que la suspension thioxotrope obtenue est, par abandon pendant un temps suffisant à la température ambiante ou grâce à un chauffage de faible durée, convertie en une suspension fluide entièrement défloculée.

2. Procédé selon la revendication 1, caractérisé en ce que le précurseur polymère liquide est constitué, pour plus de 50% en poids, de méthacrylate de méthyle.

3. Procédé selon la revendication 1 ou 2, caractérisé en ce que le précurseur polymère liquide contient de 0,01 à 10% en poids d'un agent de réticulation.

4. Procédé selon la revendication 1 ou 2, caractérisé en ce que les composés organiques du silicium contiennent des gamma-méthacryloyloxyproyltrialcoxysilanes.

5. Procédé selon les revendications 1 à 4, caractérisé en ce que le rapport pondéral des charges inorganiques au composé organique du silicium est compris entre 500 : 1 et 20 : 1.

6. Procédé selon les revendications 1 à 5, caractérisé en ce que les alkylamines agissant comme catalyseurs sur les composés organiques du silicium sont utilisées en des pourcentages de 0,25 à 5% en poids par rapport aux composés organiques du silicium.

7. Procédé selon les revendications 1 à 6, caractérisé en ce que les charges inorganiques finement divisées sont incorporées au cours d'une période de 1 à 2 heures.

8. Procédé selon les revendications 1 à 7, caractérisé en ce que, après incorporation des charges inorganiques, la suspension thixotrope obtenue est traitée par traitement thermique à 60–100°C.

9. Procédé selon les revendications 1 à 7, caractérisé en ce que, après incorporation des charges inorganiques, la suspension thixotrope obtenue est laissée à réagir pendant au moins 24 heures à la température ambiante.

10. Procédé selon les revendications 1 à 9, caractérisé en ce que la suspension fluide entièrement défloculée présente une viscosité non supérieure à 500 mPa.s.